# EUROPÄISCHE PATENTSCHRIFT

(11) **EP 1 442 953 B1**
(45) Veröffentlichungstag und Bekanntmachung des Hinweises auf die Patenterteilung: **21.06.2006**
(21) Anmeldenummer: 04000283.4
(22) Anmeldetag: 09.01.2004
(51) Int. Cl.: B60T 13/68

(54) **Verfahren zum Betreiben der Bremsanlage eines Anhängerfahrzeuges**
Method for operating a brake system of a tractor-trailer combination
Procédé pour la mise en oeuvre d'un système de freinage pour un train routier

(30) Priorität: 28.01.2003 DE 10303129
(43) Veröffentlichungstag der Anmeldung: 04.08.2004
(73) Patentinhaber: BPW Bergische Achsen KG, 51674 Wiehl (DE)
(72) Erfinder:
(74) Vertreter: Christophersen & Partner

(56) Entgegenhaltungen:
- EP-A- 0 189 076
- EP-A- 0 934 859

## Beschreibung

Die Erfindung betrifft ein Verfahren zum Betreiben der Bremsanlage eines Anhängerfahrzeugs mit Doppel- oder Mehrfachachsaggregat, wobei die Räder der Achsen des Aggregats jeweils mit eigenen Betriebsbremsen (Trommel- oder Scheibenbremsen) versehen sind und die individuelle Bremsdruckregelung über eine gemeinsame Bremsenansteuerung erfolgt, welche im Falle einer Vollast- oder Notfallbremsung sämtliche Bremsen des Aggregates ansteuert.

Bei Anhängerfahrzeugen mit Doppel- oder Dreifachachsaggregat, von denen einzelne Achsen auch als Liftachsen ausgebildet sein können, erfolgt stets eine Abbremsung aller aktiver Achsen, d.h. aller Achsen mit Ausnahme etwaiger angehobener Achsen. Dies sichert eine möglichst gleichmäßige Verteilung der gesamten Bremsleistung und damit eine minimale Beanspruchung der einzelnen Bremse. In der Praxis führt diese Betriebsweise der Bremsanlage eines Anhängerfahrzeuges allerdings dazu, daß die Bremsen in mehr als 90 % aller Fälle in ihrem unteren Teillastbereich betrieben werden. Vordergründig betrachtet schont diese Betriebsweise zwar die einzelne Bremse, jedoch ist dies für moderne, leistungsstarke Trommel- oder Scheibenbremsen, welche konstruktiv in Richtung auf ihren Vollastzustand ausgelegt sind, nicht nur von Vorteil. Die Praxis zeigt vielmehr, daß es für Fahrzeugbremsen von Vorteil ist, wenn diese häufiger bei hoher oder zumindest bei erhöhter Belastung betrieben werden, als dies in der Praxis der Fall ist.

Ein Verfahren zum Betreiben der Bremsanlage eines Anhängerfahrzeugs nach dem Oberbegriff von Anspruch 1 ist aus EP 0934859 bekannt.

Vor diesem Hintergrund liegt der Erfindung die **Aufgabe** zugrunde, ein Verfahren zum Betreiben der Bremsanlage eines Anhängerfahrzeugs mit Doppel- oder Mehrfachachsaggregat zu entwickeln, welches einen häufigeren Betrieb der Bremsen in jenem Betriebsbereich ermöglicht, für den die Bremsen konstruktiv ausgelegt sind.

Zur **Lösung** dieser Aufgabe wird bei einem Verfahren mit den eingangs genannten Merkmalen vorgeschlagen, daß im Falle einer Teillastbremsung nur die Bremsen einer Achse der aktiven Achsen des Aggregats angesteuert werden, und daß
- bei einer darauf folgenden erneuten Teillastbremsung und/oder
- bei Erreichen eines vorgegebenen Betriebsparameters der Bremsen der Achse während der Teillastbremsung
nur die Bremsen einer anderen Achse der aktiven Achsen des Aggregats angesteuert werden.

Bei dem erfindungsgemäßen Verfahren für den Betrieb der Bremsanlage eines Anhängerfahrzeuges wird daher durch eine gezielte Ansteuerung der Bremsen der einzelnen Achsen im Teillastbereich nur jeweils eine dieser Achsen für die Bremsarbeit herangezogen. Dies führt zu einer höheren spezifischen Beanspruchung der betreffenden Bremse mit der Folge einer erhöhten Bildung von Reibkohle im Bereich der Bremsbeläge sowie ferner mit der Folge einer deutlichen Verminderung der Neigung zur Verglasung. Die einzelnen Bremsen arbeiten häufiger in einem Belastungsbereich, für den sie eigentlich konzipiert und konstruktiv ausgelegt sind. Von Vorteil ist ferner, daß die Bremsen der jeweils nicht in Anspruch genommenen Anhängerachsen abkühlen können und daher für Notbremssituationen mit ihrer vollen Wärmespeicherkapazität zur Verfügung stehen.

Die Erfindung geht von der Erfahrung aus, daß sich in der Praxis des Schwerlast-Anhängerbetriebes der Betriebsbremsbereich druckluftbetätigter Anhängerbremsen zu 90 % auf Werte kleiner 2 bar beschränkt. Für eine druckluftbetätigte Bremse ist dies ein sehr geringer Bremsdruck. In diesem Druckbereich werden die Drucksteuerventile an der Grenze ihres Ansprechdruckes betrieben, wodurch die Reaktion auf eingegebene Signale sehr große Toleranzen zum eingesteuerten Druck aufweist. So ist z.B. bei einem eingesteuerten Druck von 1,2 bar und einem Ansprechdruck der druckluftbetätigten Bremse von 0,5 bar +/- 0,1 bar schon eine Toleranz von +/- 20 % gegeben. Die Bremswirkung entsteht aus dem Differenzdruck zum Ansprechdruck und dem Ausgangsdruck der Drucksteuerventile, die jeweils eine Toleranz im Verhältnis zum eingesteuerten Druck von +/- 0,1 bar aufweisen. Damit ergeben sich wirksame Drücke zwischen 0,5 und 0,9 bar, dies bedeutet eine Abweichung von annähernd 50 %.

Wird hingegen gemäß dem erfindungsgemäßen Verfahren nur jeweils eine Achse des Achsaggregats gebremst, so vergrößert sich der erforderliche Zylinderdruck für eine gleichbleibende Bremswirkung auf 3,6 bar +/- 0,1 bar, bei einem verbleibenden Ansprechdruck von 0,5 bar +/- 0,1 bar. Damit ergibt sich ein möglicher wirksamer Bremsdruck zwischen 2,9 und 3,3 bar, und eine mögliche Abweichung von nur noch 10 %.

Erreicht wird dieses günstige Hystereseverhalten durch eine feste Druckübersetzung im Verhältnis 1 : 3 im Betriebsbremsbereich.

Die höheren Bremsenzuspannkräfte wirken sich auch günstig auf ein mögliches Rattern oder Quietschen der Bremse aus und bewirken im Falle der Trommelbremse ein Einschleifen auf die sich bei einer Gefahrenbremsung einstellenden Trommel- und Belagdurchmesser und damit ein reduziertes Fading.

Durch die erhöhte Bremsleistung an der jeweils abgebremsten Achse stellt sich ferner ein höheres Temperaturniveau an der betreffenden Bremstrommel bzw. Bremsscheibe ein. Dies verbessert die Bildung von Reibkohle und verhindert das unerwünschte Verglasen. Um in einem Temperaturbereich zu bleiben, der für den Belagverschleiß optimal ist, kann die Bremse z.B. nach einer bestimmten Einsatzdauer auf eine bis dahin nicht aktivierte bzw. nur mit Anlegedruck aktivierte Achse umgeschaltet werden. Der vorgegebene Betriebsparameter für die Umschaltung von den Bremsen der Achse A auf die Bremsen der Achsen B bzw. C ist in diesem Fall die verstrichene Einsatzdauer der Bremsen der Achse A.

Alternativ ist es jedoch auch möglich, daß der vorgegebene Betriebsparameter für die Umschaltung von den Bremsen z. B. der Achse A auf die Bremsen der Achsen B bzw. C die Temperatur der Bremstrommel/Bremsscheibe der Achse A ist. Vorzugsweise beträgt die als vorgegebener Betriebsparameter herangezogene Temperatur ca. 350° C im Falle einer Bremstrommel bzw. ca. 600° C im Falle einer Bremsscheibe.

Bei einer Gefahrenbremsung werden selbstverständlich unverzüglich alle Achsen A, B, C gleichmäßig mit gleichem Bremsdruck angesteuert.

Mit einer Ausgestaltung des erfindungsgemäßen Verfahrens wird vorgeschlagen, daß in der Bremsenansteuerung steuerungstechnisch vorgegeben ist, in welcher Reihenfolge bei Teillastbremsung die einzelnen Achsen A und B bzw. A, B, C angesteuert werden.

Alternativ wird vorgeschlagen, daß die Reihenfolge der Ansteuerung der einzelnen Achsen A und B bzw. A, B und C bei Teillastbremsung durch einen Zufallsgenerator bestimmt wird.

Um Versuche auf einem Bremsenprüfstand mit einem entsprechend ausgerüsteten Anhängerfahrzeug durchführen zu können, wird mit einer weiteren Ausgestaltung des Verfahrens vorgeschlagen, daß der Bremsenansteuerung ein Fahrzeuggeschwindigkeits-Signal übermittelt wird und daß die Durchführung des Verfahrens bei Unterschreiten einer Fahrzeugmindestgeschwindigkeit von vorzugsweise 10 bis 15 km/h unterbleibt, damit die Funktion der Feststellbremse gewährleistet bleibt.

Die Durchführung des Verfahrens wird nachfolgend zusätzlich anhand der beigefügten Zeichnungen erläutert. Darin zeigen:
- Fig. 1: eine Fahrzeugkombination des Schwerlast-Güterverkehrs, bestehend aus Zugmaschine und Sattelauflieger, wobei der Sattelauflieger mit einem Dreifachachsaggregat versehen ist;
- Fig. 2: eine Fahrzeugkombination, bestehend aus Zugfahrzeug und drehschemelgelenktem Anhänger mit Doppelachsaggregat;
- Fig. 3: eine Fahrzeugkombination, bestehend aus Zugmaschine und einem Zentralachsanhänger mit starrer Deichsel;
- Fig. 4: ein Schaltschema für ein nach dem erfindungsgemäßen Verfahren zum Betrieb einer Bremsanlage betriebenes Dreifachachsaggregat, einmal im Falle dreier aktiver Achsen und zum anderen im Falle zweier aktiver Achsen.

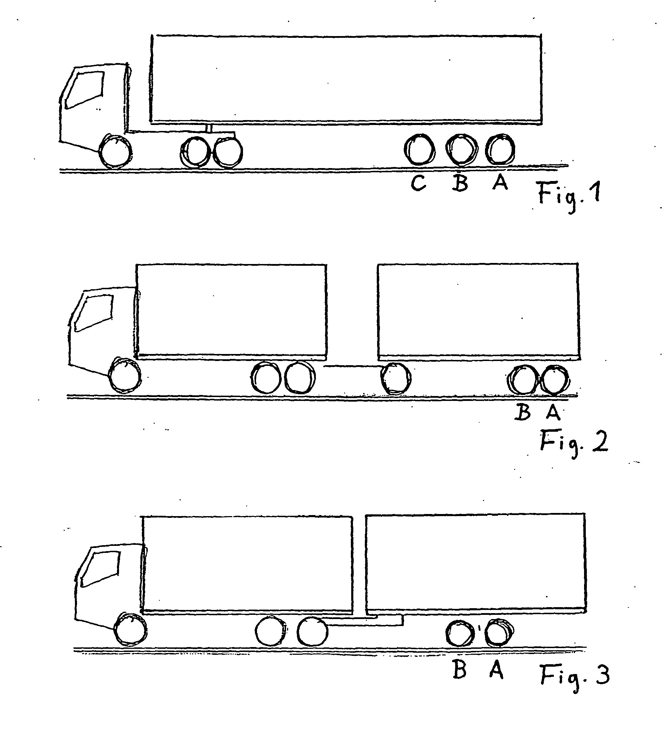

Die in den Figuren 1 bis 3 dargestellten Fahrzeuge verfügen, was die jeweiligen Sattelauflieger bzw. Anhänger angeht, über Doppelachsaggregate mit den Achsen A und B oder Dreifachachsaggregate mit den Achsen A, B und C. In gleicher Weise ist die Erfindungaber auch bei z. B. Vierfachachsaggregaten mit Achsen A, B, C, D einsetzbar. Die auf der Zeichnung bezeichneten Achsen A, B und C sind nicht-angetriebene Achsen, d.h. reine Nachlaufachsen. Die Räder jeder der Achsen A, B, C sind mit eigenen Trommel- oder Scheibenbremsen versehen. Sofern eine der Achsen eine angehobene Liftachse ist, nimmt diese Achse an den Bremsvorgängen nicht teil. Die Reihenfolge der Achsen ist nicht auf Ausführungsbeispiel beschränkt. So kann die Achse A auch z. B. vorne oder in der Mitte des Achsaggregates angeordnet sein.

Die Bremsanlage ist vorzugsweise druckluftbetrieben, wobei die Verteilung des Bremsdrucks auf die Betriebsbremsen der einzelnen Räder bzw. Achsen individuell über eine gemeinsame Bremsenansteuerung erfolgt, d.h. ein vorzugsweise zentral angeordnetes Steuergerät zur Betätigung der Drucksteuerventile. Die Bremsenansteuerung kann sich entweder im Zugfahrzeug befinden oder auch im Anhängerfahrzeug.

Während bei einer Vollast- oder Notfallbremsung über die Drucksteuerventile sämtliche Bremsen des Doppel- oder Dreifachachsaggregates angesteuert werden, erfolgt bei Teillastbremsung nur die Ansteuerung der Bremsen einer der beiden Achsen A, B des Doppelachsaggregates bzw. eines der drei Achsen A, B, C des Dreifachachsaggregates.

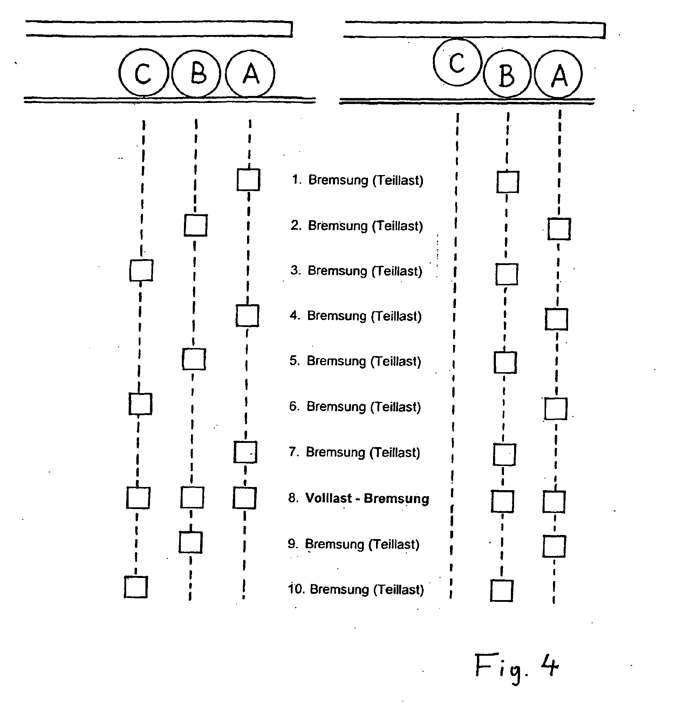

In Fig. 4 ist für verschiedene aufeinanderfolgende Lastfälle die Umschaltung zwischen den Bremsen der einzelnen Achsen A, B, C dargestellt. Der linke Teil der Fig. 4 zeigt ein mögliches Umschaltschema für ein Dreifachachsaggregat mit drei aktiven Achsen, wohingegen im rechten Teil der Fig. 4 ein Fall beispielhaft dargestellt ist, bei dem nur die Achsen A, B aktiv sind, hingegen die Liftachse C angehoben ist.

In den einzelnen Zeilen der Fig. 4 sind zeilenweise aufeinanderfolgende Bremsvorgänge dargestellt. Die Bremsvorgänge 1. bis 7. sind Teillast-Bremsungen, wie sie in der Praxis des Anhängerbetriebes zu nahezu 90 % auftreten. Die Bremsung 8. ist eine Vollast-Bremsung oder auch, dies wäre der Extremfall, eine Notfallbremsung. Bei den Bremsvorgängen 9. und 10. handelt es sich wiederum um Teillast-Bremsungen. Zu erkennen ist, daß in einer vorgegebenen Reihenfolge A-B-C-A-B-C-A zwischen den drei Achsen des Dreifachachsaggregates umgeschaltet wird, soweit die Bremsvorgänge den Teillastbereich nicht übersteigen. Diese Reihenfolge kann steuerungstechnisch in der gemeinsamen Bremsenansteuerung implementiert sein. Alternativ ist es auch möglich, die Reihenfolge der Ansteuerung der Bremsen der drei beteiligten Achsen durch einen Zufallsgenerator zu bestimmen.

Im Falle einer Vollast-Bremsung gemäß Zeile 8. werden die Betriebsbremsen aller drei Achsen A, B, C (bzw. im Fall der angehobenen Liftachse C die Achsen A, B) mit dem vollen Bremsdruck beaufschlagt.

Die individuelle Ansteuerung der Bremsen der einzelnen Achsen bewirkt eine höhere Bremsleistung an der abgebremsten Achse und somit dort ein höheres Temperaturniveau der Bremstrommel bzw. der Bremsscheibe. Dadurch wird die Reibkohlebildung verbessert, ferner wird ein Verglasen verhindert. Um z. B. in dem jeweils für den Belagverschleiß optimalen Temperaturbereich zu bleiben, erfolgt die Umschaltung, z.B. von den Bremsen der Achse C auf die Bremsen der Achse B abhängig von vorgegebenen Betriebsparametern. Diese Umschaltung kann erfolgen
- bei Erreichen einer bestimmten Bremsentemperatur und/oder
- nach einer bestimmten Betätigungszeit mit einem bestimmten Bremsdruck und/oder
- nach Erreichen einer bestimmten Bremsarbeit und/oder
- in Abhängigkeit von der jeweiligen Bremsbelag-Reststärke bzw. dem individuellen Verschleißzustand der Bremsen. Eine Umschaltung erfolgt mit Priorität auf eine solche Achse, deren Bremsen den geringsten Verschleiß aufweisen.

Von Vorteil ist des weiteren die verringerte Neigung zu Bremsgeräuschen oder einem Rattern der Bremsen.

Das System eignet sich sehr gut auch für eine Nachrüstung von Fahrzeugen. Möglich ist ferner eine Kombination mit elektronisch arbeitenden Bremssteuersystemen zur Verbesserung der Fahrstabilität.

## Patentansprüche

1. Verfahren zum Betreiben der Bremsanlage eines Anhängerfahrzeugs mit Doppel- oder Mehrfachachsaggregat, wobei die Räder der Achsen des Aggregats jeweils mit eigenen Betriebsbremsen versehen sind, und die individuelle Bremsdruckregelung über eine gemeinsame Bremsenansteuerung erfolgt, welche im Falle einer Vollast- oder Notfallbremsung sämtliche Bremsen des Aggregates ansteuert,
wobei im Falle einer Teillastbremsung nur die Bremsen einer Achse (A) der aktiven Achsen (A, B, C) des Aggregats angesteuert werden, **dadurch gekennzeichnet, daß**
- bei einer darauffolgenden, erneuten Teillastbremsung und/oder
- bei Erreichen eines vorgegebenen Betriebsparameters der Bremsen der Achse (A) während der Teillastbremsung
nur die Bremsen einer anderen Achse (B bzw. C) der aktiven Achsen (A, B, C) des Aggregats angesteuert werden.

2. Verfahren nach Anspruch 1.
**dadurch gekennzeichnet,**
**daß** der vorgegebene Betriebsparameter für die Umschaltung von den Bremsen der Achse (A) auf die Bremsen der Achsen (B bzw. C) die verstrichene Einsatzdauer der Bremsen der Achse (A) ist.

3. Verfahren nach Anspruch 1,
**dadurch gekennzeichnet,**
**daß** der vorgegebene Betriebsparameter für die Umschaltung von den Bremsen der Achse (A) auf die Bremsen der Achsen (B bzw. C) die Temperatur der Bremstrommel/Bremsscheibe der Achse (A) ist.

4. Verfahren nach Anspruch 3,
**dadurch gekennzeichnet,**
**daß** die als vorgegebener Betriebsparameter herangezogene Temperatur ca. 350° C (im Falle einer Bremstrommel) bzw. ca. 600° C (im Falle einer Bremsscheibe) beträgt.

5. Verfahren nach Anspruch 1,
**dadurch gekennzeichnet,**
**daß** der vorgegebene Betriebspararmeter für die Umschaltung von den Bremsen der Achse (A) auf die Bremsen der Achsen (B bzw. C) die individuelle Bremsbelagstärke bzw. der individuelle Verschleißzustand der Bremsen ist.

6. Verfahren nach einem der Ansprüche 1 bis 4,
**dadurch gekennzeichnet,**
**daß** in der Bremsenansteuerung steuerungstechnisch vorgegeben ist, in welcher Reihenfolge bei Teillastbremsung die einzelnen Achsen (A) und (B) bzw. (A), (B) und (C) angesteuert werden.

7. Verfahren nach einem der Ansprüche 1 bis 4,
**dadurch gekennzeichnet,**
**daß** die Reihenfolge der Ansteuerung der einzelnen Achsen (A) und (B) bzw. (A), (B) und (C) bei Teillastbremsung durch einen Zufallsgenerator bestimmt wird.

8. Verfahren nach einem der vorangehenden Ansprüche,
**dadurch gekennzeichnet,**
**daß** der Bremsenansteuerung ein Fahrzeuggeschwindigkeits-Signal übermittelt wird, und daß die Durchführung des Verfahrens bei Unterschreiten einer Fahrzeugmindestgeschwindigkeit von vorzugsweise 10 bis 15 km/h unterbleibt.

## Claims

1. Method for operating the brake system of a trailer vehicle with a two-axle or multi-axle unit, wherein the wheels of the axles of the unit are in each case provided with dedicated operating brakes, and the individual brake pressure is adjusted via a common brake control system which operates all the brakes of the unit in the event of full-load braking or emergency braking, wherein only the brakes of one axle (A) of the active axles (A, B, C) of the unit are operated in the event of partial-load braking, **characterized in that**
- during subsequent, renewed partial-load braking and/or
- when a predefined operating parameter of the brakes of the axle (A) is reached during the partial-load braking,
only the brakes of another axle (B and/or C) of the active axles (A, B, C) of the unit are operated.

2. Method according to Claim 1, **characterized in that** the predefined operating parameter for changing over from the brakes of the axle (A) to the brakes of the axles (B and/or C) is the elapsed period of use of the brakes of the axle (A).

3. Method according to Claim 1, **characterized in that** the predefined operating parameter for changing over from the brakes of the axle (A) to the brakes of the axles (B and/or C) is the temperature of the brake drum/brake disc of the axle (A).

4. Method according to Claim 3, **characterized in that** the temperature used as the predefined operating parameter is approximately 350°C (in the case of a brake drum) or approximately 600°C (in the case of a brake disc).

5. Method according to Claim 1, **characterized in that** the predefined operating parameter for changing over from the brakes of the axle (A) to the brakes of the axles (B and/or C) is the individual brake lining thickness or the individual state of wear of the brakes.

6. Method according to any of Claims 1 to 4, **characterized in that** the order in which the individual axles (A) and (B) or (A), (B) and (C) are operated in the case of partial-load braking is predefined in the brake control system.

7. Method according to any of Claims 1 to 4, **characterized in that** the order in which the individual axles (A) and (B) or (A), (B) and (C) are operated in the case of partial-load braking is determined by a random generator.

8. Method according to any of the preceding claims, **characterized in that** a vehicle speed signal is transmitted to the brake control system, and **in that** the method is not carried out if the vehicle is below a vehicle minimum speed of preferably 10 to 15 km/h.

## Revendications

1. Procédé pour le fonctionnement d'un système de freinage pour un véhicule à remorque avec un ensemble à double essieu ou à essieux multiples, chacune des roues des essieux de l'ensemble étant munie de ses propres freins de service et le réglage individuel de la pression de freinage s'effectue au moyen d'une commande des freins commune, qui, en cas de freinage en pleine charge ou de freinage d'urgence actionne tous les freins de l'ensemble, seuls les freins de l'un (A) des essieux actifs (A, B, C) de l'ensemble étant actionnés en cas de freinage en charge partielle, **caractérisé en ce que** :
- en cas d'un nouveau freinage ultérieur en charge partielle et/ou
- lorsqu'un paramètre de service prédéfini pour les freins de l'essieu (A) est atteint au cours du freinage en charge partielle,
seuls les freins d'un autre essieu (B ou C) des essieux actifs (A, B, C) de l'ensemble sont actionnés.

2. Procédé selon la revendication 1, **caractérisé en ce que** le paramètre de service prédéfini pour le basculement des freins de l'essieu (A) sur les freins de l'essieu (B ou C) est la durée d'utilisation écoulée des freins de l'essieu (A).

3. Procédé selon la revendication 1, **caractérisé en ce que** le paramètre de service prédéfini pour le basculement des freins de l'essieu (A) sur les freins de l'essieu (B ou C) est la température du tambour de frein ou disque de frein de l'essieu (A).

4. Procédé selon la revendication 3, **caractérisé en ce que** la température prise en compte pour le paramètre de service prédéfini est 350° C environ (dans le cas d'un tambour de frein) et 600° C environ (dans le cas d'un disque de frein).

5. Procédé selon la revendication 1, **caractérisé en ce que** le paramètre de service prédéfini pour le basculement des freins de l'essieu (A) sur les freins de l'essieu (B ou C) est l'épaisseur de la garniture de chaque frein, à savoir de l'état d'usure de chaque frein.

6. Procédé selon l'une quelconque des revendications 1 à 4, **caractérisé en ce que** l'ordre successif d'actionnement des différents essieux (A) et (B) ou (A), (B) et (C) en cas de freinage en charge partielle est prédéfini par la technique de commande dans la commande des freins.

7. Procédé selon l'une quelconque des revendications 1 à 4, **caractérisé en ce que** l'ordre successif d'actionnement des différents essieux (A) et (B) ou (A), (B) et (C) est déterminé en cas de freinage en charge partielle par un générateur de données aléatoires.

8. Procédé selon l'une quelconque des revendications précédentes, **caractérisé en ce qu'**un signal de la vitesse du véhicule est transmis à la commande des freins et **en ce que** le procédé n'est plus mis en oeuvre en cas de vitesse inférieure à une vitesse minimale du véhicule, de préférence 10 à 15 km/h.
